# FASCICULE DE BREVET EUROPEEN

(11) **EP 3 983 267 B1**
(45) Date de publication et mention de la délivrance du brevet: **05.07.2023**
(21) Numéro de dépôt: 20729966.0
(22) Date de dépôt: 25.05.2020
(51) Int. Cl.: B60R 16/033

(54) **PROCÉDÉ DE RÉGULATION DE RÉSEAU DE BORD D'UN VÉHICULE**
VERFAHREN ZUR EINSTELLUNG DES BORDNETZES EINES FAHRZEUGS
METHOD FOR ADJUSTING THE ON-BOARD NETWORK OF A VEHICLE

(30) Priorité: 13.06.2019 FR 1906342
(43) Date de publication de la demande: 20.04.2022
(73) Titulaire: Renault s.a.s, 92100 Boulogne Billancourt (FR)
(72) Inventeur: SAINT-LEGER, Gerard, 78000 Versailles (FR)
(74) Mandataire: Renault Group
(86) Numéro de dépôt international: PCT/EP2020/064363
(87) Numéro de publication internationale: WO 2020/249376

(56) Documents cités:
- EP-A1- 2 168 827
- WO-A1-2017/027332
- JP-A- 2018 117 518
- US-A1- 2012 203 414
- US-A1- 2013 024 055

## Description

L'invention concerne un procédé de régulation de réseau de bord d'un véhicule et un réseau de bord mettant en oeuvre le procédé.

La régulation d'un réseau de bord de voiture se fait habituellement sur la tension obtenue au niveau de la distribution principale, c'est-à-dire aux bornes de la batterie (batterie principale en cas de réseau à plusieurs batteries). Cette régulation assure une plage de tension compatible avec les exigences des consommateurs électriques et la recharge de la batterie. Nous avons de plus en plus souvent besoin de piloter une recharge rapide de la batterie. En cas de réseau à plusieurs batteries, on peut être amené à choisir des critères spécifiques par batterie et à faire une synthèse prenant en compte tous les besoins. Nous avons de plus en plus souvent besoin aussi de maîtriser la tension pendant une décharge volontaire de la batterie (cas typique d'un délestage d'alternateur pour utiliser l'énergie récupérée précédemment en décélération). Le cas des batteries lithium ou des super-capacités, en recharge est typique de ce nouveau besoin de régulation car ces stockages sont capables de se charger avec des courants bien supérieurs aux courants de charge d'une batterie plomb et peuvent modifier la gestion globale du réseau de bord. le problème technique à résoudre est celui de maitriser à tout instant la tension du réseau de bord, tout en gérant la puissance électrique par l'alternateur et la décharge d'une ou plusieurs batteries, de toute technologie (plomb, lithium, super capacité).

Le document FR2803253 divulgue par exemple un procédé de stockage électrique pour un véhicule hybride. Le document divulgue ainsi un procédé de régulation de réseau de bord capable de charger une batterie. Cependant le seul critère prévu pour réaliser une limitation de courant basé sur une simple stratégie de récupération d'énergie, a pour inconvénient de ne pas prendre en compte d'autres évènements que celui de la récupération d'énergie, par exemple dans une phase de ralentissement. Si en l'occurrence, la batterie est anormalement déchargée, et l'environnement sous capot est un peu chaud, le document cité n'enseigne rien pour limiter le courant dans les câbles tout en assurant la meilleure charge de la batterie.

US2012/203414 A1 divulgue un véhicule hybride.

Pour apporter des solutions au problème posé par l'état antérieur de la technique, l'invention a pour objet un procédé de régulation de réseau de bord d'un véhicule, comprenant des étapes consistant à détecter une commande de charge d'une ou plusieurs batteries, et à détecter une commande de décharge de chaque batterie

Le procédé est remarquable en ce qu'il comprend des étapes consistant à adapter une consigne de régulation en tension d'un générateur de manière à charger une ou plusieurs batteries si une commande de charge est détectée, à adapter ladite consigne de régulation en tension du générateur de manière à décharger la ou les batteries si une commande de décharge est détectée, età maintenir un état de charge de la ou lesdites batteries en absence de commande de charge et de commande de décharge.

Particulièrement, de manière à charger la ou lesdites batteries, le procédé comprend une étape consistant à augmenter ladite consigne de régulation en tension tant qu'une valeur de courant mesurée de la ou lesdites batteries est inférieure à une valeur de courant maximale de charge.

Plus particulièrement, le procédé comprend une étape consistant à cesser d'augmenter la consigne de régulation en tension si une tension de réseau de bord atteint une tension maximale admissible.

Plus particulièrement encore, le procédé comprend une étape consistant baisser la consigne de régulation en tension lorsque la valeur de courant mesurée de batterie n'est pas inférieure à la valeur maximale de courant de charge.

Particulièrement aussi, de manière à décharger la ou les batteries, le procédé comprend une étape consistant à diminuer la consigne de régulation en tension tant qu'une valeur de courant mesurée de chaque batterie est supérieure à une valeur négative de courant minimale de décharge.

Plus particulièrement, le procédé comprend une étape consistant à cesser de diminuer la consigne de régulation en tension si ladite consigne de régulation en tension atteint une valeur minimale admissible.

Plus particulièrement encore, le procédé comprend une étape consistant augmenter la consigne de régulation en tension lorsque la valeur de courant mesurée de chaque batterie n'est pas supérieure à la valeur de courant minimale de décharge.

L'invention a aussi pour objet un réseau de bord d'un véhicule comprenant au moins une batterie, un générateur, un calculateur embarqué, et une mémoire contenant un programme qui comporte des instructions informatiques qui pilotent le procédé selon l'invention lorsque ledit programme est exécuté par le calculateur embarqué.

L'invention a encore pour objet un véhicule automobile comprenant le réseau de bord ci-dessus exposé.

D'autres avantages et caractéristiques de l'invention apparaîtront à la lecture de la description détaillée de modes de mise en oeuvre et de réalisation, à titre d'exemples illustratifs et non limitatif, en référence aux dessins annexés dans lesquels :
La figure 1 montre schématiquement un réseau de bord à une batterie sur lequel est mise en oeuvre l'invention ;
La figure 2 montre schématiquement un réseau de bord à deux batterie sur lequel est mise en oeuvre l'invention ;
La figure 3 montre des étapes principales de procédé conforme à l'invention;
La figure 4 montre des étapes de séquence de charge du procédé conforme à l'invention ;
La figure 5 montre des étapes de séquence de décharge du procédé conforme à l'invention ;
La figure 6 montre un comportement possible du réseau bord qui résulte du procédé conforme à l'invention.

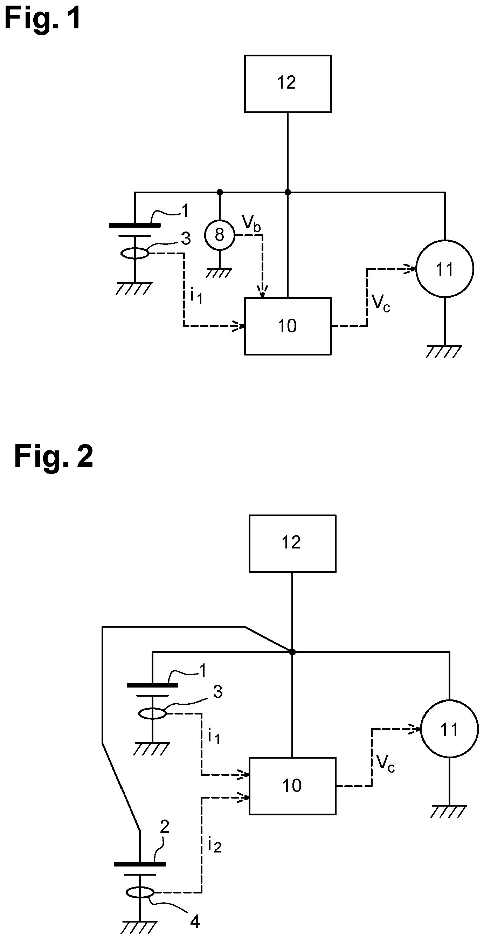

[Fig. 1] montre un réseau de bord de véhicule sur lequel l'invention est mise en oeuvre. Le réseau de bord représenté comprend une batterie 1 à tension continue nominale de 12 V ou de 48 V. La basse tension de la batterie, inférieure à 100 V, permet de relier un pôle de la batterie, par exemple le pôle négatif à la masse du véhicule, sans danger pour un utilisateur du véhicule. L'autre pôle, par exemple le pôle positif de la batterie, est relié à un pôle redressé positif de générateur de courant 11, de type alternateur ou alternodémarreur. La batterie 1 et le générateur 11 constituent une source de courant pour alimenter en énergie un ensemble 12 de consommateurs électriques comprenant, à titre purement illustratif et non exhaustif, des actionneurs électromécaniques, des éléments d'éclairage et de signalisation, des circuits électroniques de contrôle-commande parmi lesquels un calculateur embarqué 10 héberge en mémoire un programme informatique contenant des instructions pour mettre en oeuvre le procédé expliqué ci-après lorsque les instructions sont exécutées par le calculateur embarqué 10.

Le calculateur embarqué 10 mesure aussi une valeur v_{b} de tension du réseau de bord au moyen d'un capteur 8 de tension, de préférence en sortie de la batterie 1. Le calculateur embarqué 10 mesure une valeur i₁ de courant circulant dans la batterie 1 au moyen d'un capteur 3 de courant. Une décharge de la batterie 1 définit une valeur i₁ de courant négative. Une charge de la batterie définit une valeur i₁ de courant positive. Le calculateur embarqué 10 génère une valeur v_{c} de consigne de pilotage en tension du générateur 11 à partir de la valeur i₁ de courant mesurée par mise en oeuvre en temps réel du procédé expliqué ci-après.

[Fig. 2] montre un autre réseau de bord de véhicule qui diffère de celui de la figure 1 en ce qu'il comprend une deuxième batterie 2. Lorsque les batteries 1 et 2 sont connectées ou connectables en parallèle sur le réseau de bord comme représenté sur la figure 2, la batterie 2 est de tension continue nominale identique à celle de la batterie 1. Le calculateur embarqué 10 génère la valeur v_{c} de consigne de pilotage en tension du générateur 11, par mise en oeuvre en temps réel du procédé expliqué ci-après, à partir d'une valeur i_{b} de courant égale à la somme de la valeur i₁ de courant mesurée et d'une valeur i₂ de courant circulant dans la batterie 2 mesurée au moyen d'un capteur 4 de courant. Si la batterie 2 est déconnectée du réseau de bord, par exemple au moyen d'un interrupteur (non représenté), la valeur i₂ de courant circulant dans la batterie 2 est nulle, et la valeur i_{b} de courant batterie est égale à la valeur i₁ de courant circulant dans la batterie 1. Réciproquement, si la batterie 1 est déconnectée du réseau de bord, par exemple au moyen d'un interrupteur (non représenté), la valeur i₁ de courant circulant dans la batterie 1 est nulle, et la valeur i_{b} de courant batterie est égale à la valeur i₂ de courant circulant dans la batterie 2.

Le nombre de batteries n'est pas limité à deux. Le procédé décrit ci-après peut alors être mis en oeuvre en utilisant une valeur i_{b} de courant batterie égale à la somme des courants circulant dans les batteries ou en tenant compte séparément de chaque courant i₁ et i₂ et en prenant en compte les critères du courant le plus limitant.

Si la batterie 2 est de tension continue nominale différente de celle de la batterie 1, les deux batteries ne sont pas connectées directement en parallèle comme représenté sur la figure 2. Le cas peut par exemple se produire lorsque la batterie 1 de tension nominale 12 V, est réservée à l'alimentation de l'ensemble 12 de consommateurs électriques dits de servitude, alors que la batterie 2 de tension nominale 48 V, est réservée à une traction en mode micro hybride du véhicule et si besoin à une recharge de la batterie 1 via un convertisseur DC/DC (non représenté) de manière connue en soi par ailleurs. Le calculateur embarqué 10, ou un autre calculateur embarqué peut alors mettre en oeuvre pour la batterie 2 une deuxième occurrence du procédé disjointe d'une première occurrence du procédé pour la batterie 1. La première occurrence du procédé génère la valeur v_{c} de consigne de pilotage en tension du générateur 11, réalisé par un alternateur 12 V, à partir de la valeur i_{b}=i₁ de courant mesurée. La deuxième occurrence du procédé génère une autre valeur v_{c} de consigne de pilotage en tension d'un autre générateur (non représenté), réalisé par un alternodémarreur 48 V, à partir de la valeur i_{b}=i₂ de courant mesurée.

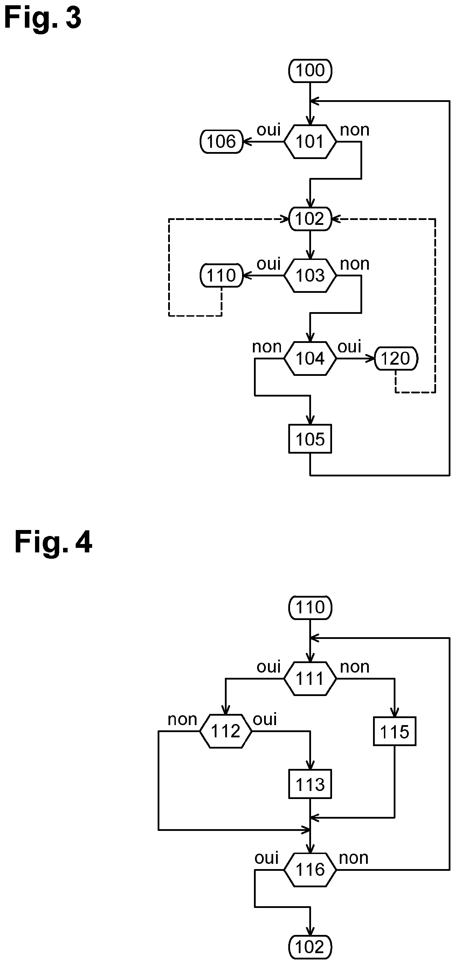

[Fig. 3] montre des étapes principales de procédé conforme à l'invention. Le procédé commence par une étape 100 de début de mission. L'étape 100 est activée dès le réveil du véhicule, déclenché par l'ouverture d'une porte, la mise du contact. En d'autres termes, on passe d'une phase parking à une phase active du véhicule.

A la suite de l'étape 100, une étape 101 teste une condition de fin de mission. Si la condition de fin de mission est vérifiée, le procédé se termine en se branchant sur une étape 106 de fin. Si la condition de fin de mission n'est pas vérifiée, le procédé se branche sur une étape 102 d'appel à une séquence de gestion du stockage d'énergie électrique. La condition de fin de mission est détectée vérifiée lorsque le véhicule n'est plus utilisé, par exemple suite au verrouillage des portes ou à l'abandon du véhicule sans aucune fonction utilisateur activée. On sort de la phase active pour aller vers la phase parking du véhicule.

A la suite de l'étape 102, ou directement à la suite de l'étape 101 en absence de séquence de gestion du stockage d'énergie électrique, une étape 103 teste une demande de charge de la batterie. Si une demande de charger la batterie existe, le procédé se branche sur une étape 110 d'appel à une séquence de charge de la batterie. La demande de charger la batterie provient d'un autre procédé connu par ailleurs et ne faisant pas partie de l'invention. Par exemple l'autre procédé connu est un procédé de contrôle de l'état de charge SOC de la batterie. Par exemple encore l'autre procédé connu est un procédé de récupération d'énergie cinétique en phases de ralentissement commandé du véhicule. En absence de demande de charger la batterie, le procédé selon l'invention se branche sur une étape 104 qui teste une demande de décharge de la batterie.

Si une demande de décharger la batterie existe, le procédé se branche sur une étape 120 d'appel à une séquence de décharge de la batterie. La demande de décharger la batterie provient ici encore d'un autre procédé connu par ailleurs et ne faisant pas partie de l'invention. Par exemple l'autre procédé connu est un procédé de contrôle de l'état de charge SOC de la batterie pour libérer une capacité de rechargement en prévision d'un ralentissement prochain. Par exemple encore l'autre procédé connu est un procédé de soulagement du générateur électrique en phases d'accélération commandée du véhicule. En absence de demande de décharger la batterie, le procédé selon l'invention se branche sur une étape 105 de maintien de l'état de charge SOC de la batterie.

L'étape105 de maintien de l'état de charge SOC de la batterie, consiste à augmenter la valeur v_{c} de consigne de pilotage en tension du générateur si la valeur i_{b} de courant mesurée est négative, à diminuer la valeur v_{c} de consigne de pilotage en tension du générateur si la valeur i_{b} de courant mesurée est positive, et à conserver inchangée la valeur v_{c} de consigne de pilotage en tension du générateur si la valeur i_{b} de courant mesurée est nulle.

Le procédé reboucle en temps réel de l'étape 105 sur l'étape 101.

[Fig. 4] montre des étapes de séquence de charge de la batterie qui débute par une étape 111 à la suite de l'étape 110.

L'étape 111 consiste à vérifier un premier critère, à savoir que la valeur i_{b} de courant mesurée de la batterie est strictement inférieure à une valeur maximale iₘₐₓ de courant de charge permise de la batterie.

Si la valeur i_{b} de courant mesurée de la batterie n'est pas strictement inférieure à la valeur maximale iₘₐₓ de courant, une étape 115 consiste à baisser la valeur v_{c} de consigne de pilotage en tension du générateur, par exemple d'une valeur proportionnelle à la différence entre la valeur i_{b} de courant mesurée et la valeur maximale iₘₐₓ de courant, et/ou par exemple d'une valeur constante de tension prédéterminée en phase d'essais.

Si la valeur i_{b} de courant mesurée de la batterie est strictement inférieure à la valeur maximale iₘₐₓ de courant, une étape 112 consiste à vérifier un deuxième critère, à savoir qu'une valeur v_{b} de tension mesurée du réseau de bord est strictement inférieure à une valeur maximale vₘₐₓ de tension de réseau de bord permise, typiquement égale à 15 V lorsque la tension nominale est à 12 V.

Si la valeur v_{b} de tension mesurée du réseau de bord est strictement inférieure à la valeur maximale vₘₐₓ de tension de réseau de bord permise, une étape 113 consiste à augmenter la valeur v_{c} de consigne de pilotage en tension du générateur, par exemple d'une valeur proportionnelle à la différence entre la valeur maximale vₘₐₓ de tension et la valeur v_{b} de tension mesurée, et/ou par exemple d'une valeur constante de tension prédéterminée en phase d'essais.

Si la valeur v_{b} de tension mesurée du réseau de bord n'est pas strictement inférieure à la valeur maximale vₘₐₓ de tension de réseau de bord permise, une étape 116 exécutée aussi à la suite des étapes 113 et 115, consiste à vérifier une fin de charge.

Si une fin de charge est constatée en étape 116, la séquence retourne aux étapes principales, par exemple en étape 102. En absence de fin de charge constatée, la séquence reboucle sur l'étape 111. La fin de charge est constatée par exemple suite à une requête provenant d'un autre procédé qui commande de sortir du cycle de charge de la ou des batteries. Différemment, la fin de charge peut aussi être constatée au moyen d'un contrôle du courant batterie et/ou d'un contrôle de l'état de charge (SOC pour State Of Charge) calculé. Si le courant est inférieur à un seuil (ex : 2A) ou si le SOC atteint 100%, alors la fin de charge est atteinte.

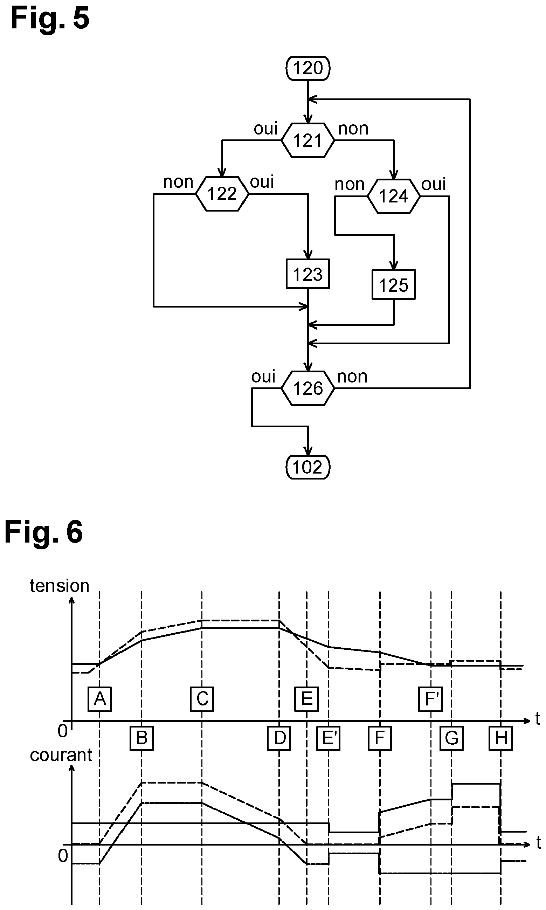

[Fig. 5] montre des étapes de séquence de décharge de la batterie qui débute par une étape 121 à la suite de l'étape 120.

L'étape 121 consiste à vérifier un troisième critère, à savoir que la valeur i_{b} de courant mesurée de la batterie est strictement supérieure à une valeur minimale iₘᵢₙ de courant de décharge permise de la batterie, par exemple égale à -40 A. On rappelle que la valeur de courant de décharge est négative. Il en est de même de la valeur minimale iₘᵢₙ de courant de décharge permise, et par conséquent la vérification assure que le courant de décharge est inférieur en valeur absolue à la valeur absolue (par exemple 40 A pour une batterie ou 80 A pour deux batteries) de la valeur minimale iₘᵢₙ de courant de décharge permise.

Si la valeur i_{b} de courant mesurée de la batterie n'est pas algébriquement strictement supérieure à la valeur minimale iₘᵢₙ de courant, en d'autres termes si la valeur absolue |i_{b}| de courant mesurée de la batterie n'est pas strictement inférieure à la valeur absolue |iₘᵢₙ| de courant limite, une étape 124 consiste à vérifier que la valeur v_{c} de consigne de pilotage en tension du générateur n'est pas inférieure à une valeur minimale vₘᵢₙ de consigne de pilotage en tension, typiquement égale à 11,8 V en regard d'une tension nominale de 12 V.

Si en étape 124, la valeur v_{c} de consigne de pilotage en tension du générateur n'est pas inférieure à la valeur minimale vₘᵢₙ de consigne de pilotage en tension, une étape 125 consiste à baisser la valeur v_{c} de consigne de pilotage en tension du générateur, par exemple d'une valeur proportionnelle à la différence entre la valeur v_{c} de tension de consigne et la valeur minimale vₘᵢₙ de tension, et/ou par exemple d'une valeur constante de tension prédéterminée en phase d'essais.

Une étape 126 succède à l'étape 125 pour vérifier une commande de fin de décharge. La commande de fin de décharge résulte par exemple d'une détection d'état de charge batterie SOC en dessous d'un seuil prédéterminé, d'une entrée en phase de ralentissement du véhicule, ou de tout autre événement justifiant une sortie du mode de décharge de la batterie.

Une fin de décharge constatée en étape 126 fait sortir le procédé de la séquence de décharge, par exemple par retranchement sur l'étape 102 de gestion du stockage électrique. Dans le cas contraire, la séquence reboucle sur l'étape 121.

Si en étape 124, la valeur v_{c} de consigne de pilotage en tension du générateur est inférieure ou égale à la valeur minimale vₘᵢₙ de consigne de pilotage en tension, la séquence se poursuit par l'étape 126.

Si en étape 121, la valeur i_{b} de courant mesurée de la batterie n'est pas strictement supérieure à la valeur minimale iₘᵢₙ de courant, en d'autres termes si le courant de décharge est supérieur en valeur absolue à ce que peut supporter la batterie, une étape 122 consiste à vérifier que la valeur v_{b} de tension mesurée du réseau de bord est strictement inférieure à la valeur maximale vₘₐₓ de tension de réseau de bord permise, typiquement égale à 15 V lorsque la tension nominale est à 12 V.

Si la valeur v_{b} de tension mesurée du réseau de bord n'est pas strictement inférieure à la valeur maximale vₘₐₓ de tension de réseau de bord permise, la séquence de décharge se poursuit directement par l'étape 126. Un abaissement de la consigne en tension du générateur, en dessous de la tension du réseau, est le levier qui permet de faire travailler la batterie.

Si en étape 122, la valeur v_{b} de tension mesurée du réseau de bord est strictement inférieure à la valeur maximale vₘₐₓ de tension de réseau de bord permise, la séquence de décharge se poursuit par une étape 123 qui consiste à augmenter la valeur v_{c} de consigne de pilotage en tension du générateur. C'est le moyen de limiter la valeur du courant de décharge. Par exemple, on passe de 12 volts à 12,1 volts de manière à faire remonter le courant de décharge de -50A vers -40A. C'est un exemple numérique que l'on peut réaliser, cela dépend entre autres de l'état de charge de la batterie. L'étape 123 se branche ensuite sur l'étape 126.

[Fig. 6] montre un effet observable du procédé sur le réseau de bord en tension en partie supérieure et en courant en parie inférieure évoluant au cours d'un temps t. En partie inférieure, une ligne brisée en trait continu indique une valeur de courant appelée dans le réseau de bord par l'ensemble 12 de consommateurs électriques, une ligne brisée en petits tirets indique la valeur i_{b} mesurée de courant batterie, une ligne brisée en grands tirets indique une valeur de courant dans l'alternateur, égale à la somme des valeurs de courant appelé dans le réseau de bord par l'ensemble 12 de consommateurs électriques et de courant batterie. En partie supérieure, une ligne brisée en trait continu indique la valeur v_{b} de tension mesurée sur le réseau de bord, une ligne brisée en grands tirets indique la valeur v_{c} de consigne en tension de l'alternateur.

Avant le point A ou après le point D, la tension du réseau de bord est imposée par la batterie. En cas de réseau avec plusieurs batteries, c'est la mieux chargée ou celle de plus haute tension à vide qui impose sa tension.

Entre les points A et B, la tension du réseau de bord est imposée par l'alternateur (ou alternodémarreur) mais limitée à une valeur permettant de ne pas dépasser le courant de charge iₘₐₓ maximal fixé pour la batterie choisie (ou pour la somme des courants de charge de toutes les batteries, par exemple).

A partir du point B, la valeur i_{b} de courant de charge de la batterie est égale à la valeur maximale iₘₐₓ de courant de charge. La tension v_{c} de consigne de l'alternateur est progressivement élevée, au fur et à mesure que la batterie se charge, pour conserver aussi longtemps que possible la valeur maximale iₘₐₓ de courant de charge. Puis lorsque la valeur de tension maximale est atteinte, au point C, cette valeur de tension est maintenue durant la charge de la batterie. Le courant de charge de la batterie diminue alors avec l'augmentation progressive de l'état de charge SOC de la batterie. Dès que l'on sort de la zone de charge, la valeur de tension v_{c} de pilotage de l'alternateur est abaissée pour obtenir la fourniture du courant consommé sur le réseau de bord, par la batterie, précédemment chargée. Le courant délivré par l'alternateur du point A au point D, poursuit sa décroissance jusqu'à devenir égal à 0, au point E.

A partir du point E, c'est la batterie qui fournit le courant consommé sur le réseau de bord, en imposant sa tension sous courant de décharge. Régulation en phase de décharge batterie : Durant la décharge de la batterie, le courant délivré par l'alternateur (ou alternodémarreur) est égal à a ampère, tant que le courant de décharge de la batterie ne dépasse pas en valeur absolue la valeur absolue de la valeur minimale iₘᵢₙ de courant (ex : 30 ampères). Si la valeur minimale iₘᵢₙ de courant est atteinte, au point F, alors l'alternateur (ou alternodémarreur) reçoit une consigne de tension en augmentation, permettant de produire le complément de courant nécessaire à la fourniture complète demandée par le réseau de bord, sans dépasser la valeur minimale iₘᵢₙ de courant de décharge fixé pour la batterie. Une augmentation de la tension en étape 123 fait travailler l'alternateur et « déleste » la batterie pour que la batterie remonte bien au-dessus du seuil de décharge maximale. Sur le graphe, à partir de F, on monte la tension de consigne v_{c} en étape 123, le courant du réseau de bord est fourni par la batterie avec le courant de décharge maxi et le courant alternateur complété par un ajustement de v_{c} en étape 123. Si le courant du réseau de bord diminuait, le courant batterie diminuerait aussi et on passerait par la branche des étapes 124 puis 125 grâce au test de l'étape 121, qui prendrait en compte que la batterie n'est plus au maximum de décharge.

A partir du point F', la tension du réseau de bord est fixée par l'alternateur (ou alternodémarreur) de manière à obtenir l'exact complément nécessaire pour que la somme du courant i_{b} venant de la batterie, et du courant venant de l'alternateur soit la valeur demandée par le réseau de bord. Ce point d'équilibre est alors maintenable autant que la charge de la batterie le permettra en régulant la valeur de tension v_{c} de pilotage de l'alternateur même si le courant consommé sur le réseau de bord varie à la hausse comme à la baisse. Si le courant consommé redevenait inférieur à la valeur absolue de la valeur minimale iₘᵢₙ de courant, on pourrait revenir à une fourniture de l'alternateur (ou alternodémarreur) égale à a ampère. Les deux séquences avec limitation à la charge et limitation à la décharge s'enchainent en fonction des conditions de conduite du véhicule : les roulages en ville sont particulièrement propices à cet enchainement : la charge s'opère lors des phases de décélérations, typiquement en arrivant sur un feu rouge et la phase de décharge fait suite lors du redépart et du roulage suivant. La maitrise des valeurs maximales Icharge et Idécharge permet ainsi de ne jamais atteindre des valeurs perturbant le fonctionnement du véhicule (ex : frein moteur trop important en cas de recharge trop élevée) ni le fonctionnement du réseau de bord (ex : chute de tension trop importante avec une décharge trop brutale de la batterie). Si les conditions d'usage du véhicule nous font atteindre une limite de charge ou de décharge, on se place à une tension de consigne Vcons qui conduit à un état de maintien de charge, avec un courant de réseau de bord délivré par l'alternateur (ou AD) et un courant batterie qui tend vers 0. Une autre utilisation de cette stratégie de régulation consiste à choisir de répartir la fourniture électrique entre toutes les sources, avec plusieurs critères limitants.

On peut par exemple choisir de faire fonctionner la (ou les) batterie(s) jusqu'à un seuil de courant de décharge maxi déterminé (ex : 80A) en complément de l'alternateur qui peut débiter jusqu'à son courant maximal (ex : 150A). La valeur maximale de courant délivrée par la batterie est alors un critère limitant de la régulation globale qui s'ajoute à celui déjà existant de la plage de tension [mini, maxi]. On obtient ainsi un réseau de bord capable d'alimenter les consommateurs du véhicule jusqu'à un maximum de 230A (150A alternateur + 80A batterie) en respectant une tension minimale déterminée (ex : 12 volts minimum), et ce, tant que la (ou les) batterie(s) est (sont) capable(s) de fournir le courant requis jusqu'à cette tension minimale.

Les critères exposés ci-dessus peuvent être eux-mêmes liés à d'autres critères. A titre illustratif, on peut fixer la valeur maximale iₘₐₓ de courant de charge permise de la batterie pour satisfaire le premier critère, à une valeur constante donnée par le constructeur de la batterie. On peut aussi stocker en mémoire du calculateur 10 une cartographie qui donne une évolution de la valeur maximale iₘₐₓ de courant, décroissante d'une valeur haute pour une température minimale de fonctionnement, à une valeur basse pour une température maximale de fonctionnement. Le passage du courant dans la batterie a tendance à chauffer la batterie par effet joule. Ainsi, à basse température, une valeur élevée de courant est bénéfique pour réchauffer la batterie. A haute température sous le capot moteur, il est préférable de limiter le courant à une plus faible valeur pour éviter de trop augmenter la température de la batterie. On peut établir la cartographie par calcul en fonction du profil du véhicule et/ou par des mesures au cours d'essais sur un prototype de véhicule.

## Revendications

1. Procédé de régulation de réseau de bord d'un véhicule, comprenant des étapes consistant à :
- détecter (103) une commande de charge d'une ou plusieurs batteries ;
- détecter (104) une commande de décharge de la ou lesdites batterie ;
- adapter (113, 115) une consigne (v_{c}) de régulation en tension d'un générateur de manière à charger la ou lesdites batteries si une commande de charge est détectée ;
- adapter (123, 125) ladite consigne (v_{c}) de régulation en tension du générateur de manière à décharger la ou lesdites batteries si une commande de décharge est détectée ;
- maintenir (105), un état de charge de la ou lesdites batteries en absence de commande de charge et de commande de décharge, **caractérisé en ce que**, de manière à charger la ou lesdites batteries, il comprend une étape consistant à augmenter (113) ladite consigne (v_{c}) de régulation en tension tant qu'une valeur (ib) de courant mesurée de la ou lesdites batteries est inférieure à une valeur (iₘₐₓ) de courant maximale de charge.

2. Procédé selon la revendication 1, **caractérisé en ce qu'**il comprend une étape consistant à cesser (112) d'augmenter ladite consigne (v_{c}) de régulation en tension si une tension de réseau de bord atteint une tension maximale admissible.

3. Procédé selon au moins l'une des revendications 1 à 2, **caractérisé en ce qu'**il comprend une étape consistant à baisser (115) ladite consigne (v_{c}) de régulation en tension lorsque ladite valeur (ib) de courant mesurée de la ou lesdites batteries n'est pas inférieure à ladite valeur (iₘₐₓ) de courant maximale de charge.

4. Procédé selon l'une des revendications 1 à 3, **caractérisé en ce que**, de manière à décharger la ou lesdites batteries, il comprend une étape consistant à diminuer (123) ladite consigne (v_{c}) de régulation en tension tant qu'une valeur (ib) de courant mesurée de la ou lesdites batteries est supérieure à une valeur (iₘᵢₙ) négative de courant minimale de décharge.

5. Procédé selon la revendication 4, **caractérisé en ce qu'**il comprend une étape consistant à cesser (122) de diminuer ladite consigne (v_{c}) de régulation en tension si ladite consigne (v_{c}) de régulation en tension atteint une valeur minimale admissible.

6. Procédé selon au moins l'une des revendications 4 ou 5, **caractérisé en ce qu'**il comprend une étape consistant augmenter (125) ladite consigne (v_{c}) de régulation en tension lorsque ladite valeur (ib) de courant mesurée de la ou lesdites batteries n'est pas supérieure à ladite valeur (iₘᵢₙ) de courant minimale de décharge.

7. Réseau de bord d'un véhicule comprenant au moins une batterie (1, 2), un générateur (11), un calculateur embarqué (10), et une mémoire contenant un programme qui comporte des instructions informatiques qui pilotent le procédé selon l'une des revendications 2 à 6 lorsque ledit programme est exécuté par le calculateur embarqué.

8. Véhicule automobile comprenant un réseau de bord selon la revendication 7.

## Patentansprüche

1. Verfahren zur Einstellung eines Bordnetzes eines Fahrzeugs, das Schritte beinhaltet, die aus Folgendem bestehen:
- Detektieren (103) eines Befehls zum Laden einer oder mehrerer Batterien;
- Detektieren (104) eines Befehls zum Entladen der einen oder der mehreren Batterien;
- Anpassen (113, 115) eines Sollwerts (v_{c}) zur Einstellung der Spannung eines Generators, um die eine oder die mehreren Batterien zu laden, wenn ein Ladebefehl detektiert wird;
- Anpassen (123, 125) des Sollwerts (v_{c}) zur Einstellung der Spannung des Generators, um die eine oder die mehreren Batterien zu entladen, wenn ein Entladebefehl detektiert wird;
- Halten (105) eines Ladezustands der einen oder der mehreren Batterien, wenn kein Ladebefehl und kein Entladebefehl vorliegt,
**dadurch gekennzeichnet, dass** es, um die eine oder die mehreren Batterien zu laden, einen Schritt beinhaltet, der darin besteht, den Sollwert (v_{c}) zur Einstellung der Spannung zu erhöhen (113), solange ein gemessener Stromwert (ib) der einen oder der mehreren Batterien kleiner als ein maximaler Ladestromwert (iₘₐₓ) ist.

2. Verfahren nach Anspruch 1, **dadurch gekennzeichnet, dass** es einen Schritt beinhaltet, der darin besteht, das Erhöhen des Sollwerts (v_{c}) zur Einstellung der Spannung zu stoppen (112), wenn eine Bordnetzspannung eine zulässige Maximalspannung erreicht.

3. Verfahren nach mindestens einem der Ansprüche 1 bis 2, **dadurch gekennzeichnet, dass** es einen Schritt beinhaltet, der darin besteht, den Sollwert (v_{c}) zur Einstellung der Spannung zu verringern (115), wenn der gemessene Stromwert (ib) der einen oder der mehreren Batterien nicht kleiner als der maximale Ladestromwert (iₘₐₓ) ist.

4. Verfahren nach einem der Ansprüche 1 bis 3, **dadurch gekennzeichnet, dass** es, um die eine oder die mehreren Batterien zu entladen, einen Schritt beinhaltet, der darin besteht, den Sollwert (v_{c}) zur Einstellung der Spannung zu reduzieren (123), solange ein gemessener Stromwert (ib) der einen oder der mehreren Batterien größer als ein negativer minimaler Entladestromwert (iₘᵢₙ) ist.

5. Verfahren nach Anspruch 4, **dadurch gekennzeichnet, dass** es einen Schritt beinhaltet, der darin besteht, das Reduzieren des Sollwerts (v_{c}) zur Einstellung der Spannung zu stoppen (122), wenn der Sollwert (v_{c}) zur Einstellung der Spannung einen zulässigen Minimalwert erreicht.

6. Verfahren nach mindestens einem der Ansprüche 4 oder 5, **dadurch gekennzeichnet, dass** es einen Schritt beinhaltet, der darin besteht, den Sollwert (v_{c}) zur Einstellung der Spannung zu erhöhen (125), wenn der gemessene Stromwert (ib) der einen oder der mehreren Batterien nicht größer als der minimale Entladestromwert (iₘᵢₙ) ist.

7. Bordnetz eines Fahrzeugs, mindestens beinhaltend eine Batterie (1, 2), einen Generator (11), einen an Bord befindlichen Rechner (10) und einen Speicher, der ein Programm enthält, das Computeranweisungen umfasst, die das Verfahren nach einem der Ansprüche 2 bis 6 steuern, wenn das Programm von dem an Bord befindlichen Rechner ausgeführt wird.

8. Kraftfahrzeug, das ein Bordnetz nach Anspruch 7 beinhaltet.

## Claims

1. Method for adjusting an on-board network of a vehicle, said method comprising steps consisting in:
- detecting (103) a command to charge one or more batteries;
- detecting (104) a command to discharge said one or more batteries;
- adapting (113, 115) a voltage adjustment setpoint (v_{c}) for a generator so as to charge said one or more batteries if a charge command is detected;
- adapting (123, 125) said voltage adjustment setpoint (v_{c}) for the generator so as to discharge said one or more batteries if a discharge command is detected;
- maintaining (105) a state of charge of said one or more batteries in the absence of a charge command and of a discharge command,
**characterized in that**, so as to charge said one or more batteries, it comprises a step consisting in increasing (113) said voltage adjustment setpoint (v_{c}) as long as a measured current value (ib) of said one or more batteries is less than a maximum charge current value (iₘₐₓ).

2. Method according to Claim 1, **characterized in that** it comprises a step consisting in stopping (112) increasing said voltage adjustment setpoint (v_{c}) if an on-board network voltage reaches a maximum admissible voltage.

3. Method according to at least one of Claims 1 and 2, **characterized in that** it comprises a step consisting in lowering (115) said voltage adjustment setpoint (v_{c}) when said measured current value (ib) of said one or more batteries is not less than said maximum charge current value (iₘₐₓ).

4. Method according to one of Claims 1 to 3, **characterized in that**, so as to discharge said one or more batteries, it comprises a step consisting in decreasing (123) said voltage adjustment setpoint (v_{c}) as long as a measured current value (ib) of said one or more batteries is greater than a negative minimum discharge current value (iₘᵢₙ).

5. Method according to Claim 4, **characterized in that** it comprises a step consisting in stopping (122) decreasing said voltage adjustment setpoint (v_{c}) if said voltage adjustment setpoint (v_{c}) reaches a minimum admissible value.

6. Method according to at least one of Claims 4 and 5, **characterized in that** it comprises a step consisting in increasing (125) said voltage adjustment setpoint (v_{c}) when said measured current value (ib) of said one or more batteries is not greater than said minimum discharge current value (iₘᵢₙ).

7. On-board network of a vehicle, said network comprising at least a battery (1, 2), a generator (11), an on-board computer (10), and a memory containing a program that comprises computer instructions which control the method according to one of Claims 2 to 6 when said program is executed by the on-board computer.

8. Motor vehicle comprising an on-board network according to Claim 7.
